# EUROPEAN PATENT APPLICATION

(11) **EP 2 549 708 A1**
(43) Date of publication of application: **23.01.2013**
(21) Application number: 10847671.4
(22) Date of filing: 18.03.2010
(51) Int. Cl.: H04L 29/02

(54) **METHOD, BASE STATION AND RELAY NODE FOR UPLINK TRANSMISSION**

(71) Applicant: Alcatel Lucent, 75007 Paris (FR)
(72) Inventor: HAN, Feng, Shanghai 201206 (CN); ZHENG, Wu, Shanghai 201206 (CN); LENG, Xiaobing, Shanghai 201206 (CN); ZHANG, Kaibin, Shanghai 201206 (CN); LIU, Jimin, Shanghai 201206 (CN)
(74) Representative: Dreiss
(86) International application number: PCT/CN2010/071126
(87) International publication number: WO 2011/113202

(57) **Abstract**

A method for uplink transmission is proposed in the present invention. The method comprises steps of: selecting, based on statistical parameters for uplink traffic of a relay node, an uplink transmission method from a set of candidate uplink transmission methods; informing the relay node of the selected uplink transmission method; and performing the uplink transmission by the relay node according to the selected uplink transmission method. A base station and a relay node for implementing the uplink transmission method are also proposed in the present invention. According to the present invention, the base station can dynamically select different uplink transmission methods based on the statistical parameters for uplink traffic of the relay node, and the relay node can perform the uplink transmission based on the selected uplink transmission method so as to achieve favorable delay performance and high resource usage efficiency.

## Description

### FIELD OF THE INVENTION

The present invention relates to a method and apparatus for uplink transmission, and more particularly to a multi-hop system, especially to an uplink transmission method in the next generation mobile communication system, and a base station and a relay node for performing the uplink transmission method.

### BACKGROUND OF THE INVENTION

In recent years, the research on relay technology is gradually attracting people's attention. The relay technology is regarded as a good candidate technology to improve cell's capacity and extend the coverage area so as to meet the requirements of the next generation mobile communication system. During the standardization progress of the next generation mobile communication system, e.g. LTE-A (Long Term Evolution Advance), agreement has been reached based on the following provision: Type-I relay shall have its own physical cell ID and it is visible to user equipments (UEs) similar to an independent base station eNB.

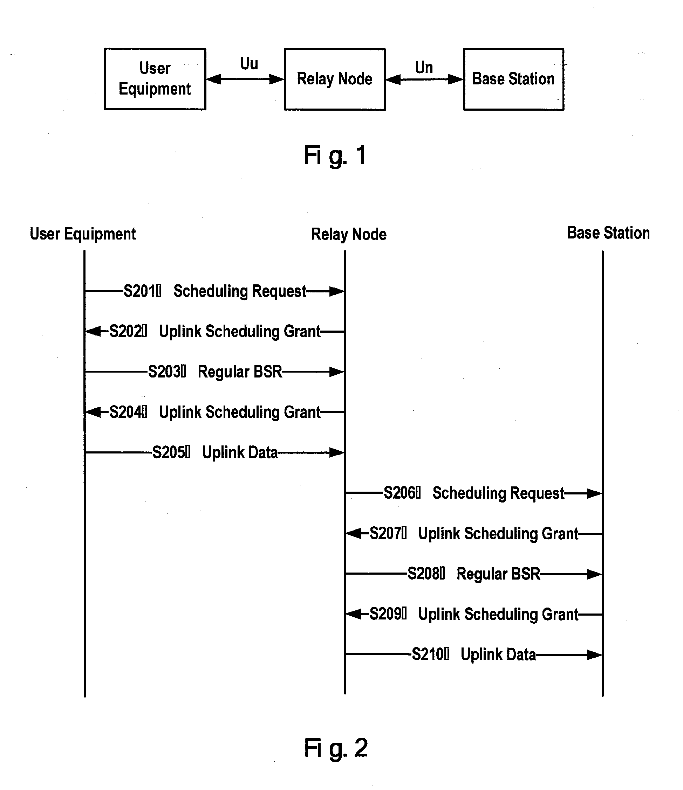

Figure 1 illustrates a schematic diagram of a basic node and interface in a system in which a Type-I relay is deployed, wherein Uu (user-user) denotes the interface between a user equipment and a relay node, and Un (user-network) denotes the interface between the relay node and a base station eNB. It should be noted that only a two-hop system is illustrated as an example here. Apparently, it is obvious to those skilled in the art to extend the two-hop system to a multi-hop system.

In reference document [ 1 ], agreement has been reached on uplink (UL) inband resource partition between a backhaul link and an access link for the Type-I relay, wherein it is stipulated that: the link from the relay node to the base station and the link from the user equipment to the relay node are time-division multiplexed in a single frequency band, i.e. only one link is active at any time.

Thus, since transmission of uplink data needs to pass through a relay node and inband resource partitioning is employed, the latency caused by transmitting UE data to a base station will be increased. In addition, the latency will be further increased when considering the subframe intervals for a Un uplink scheduling grant. On the Uu interface, if a user equipment is not allocated with enough resources to send a buffer status report BSR, the on-off keying scheduling request SR is sent to the relay node. The scheduling request SR procedure is a procedure to request uplink (i.e. a link from a user equipment to a relay node) resources. The buffer status report BSR procedure is a procedure to inform the relay node of the amount of data in an uplink buffer of a user equipment. If the existing SR and BSR procedures [ reference document 2 ] are reused on the Un interface, the UL latency becomes intolerable from the user equipment perspective.

Therefore, new technology needs to be explored and designed on the Un interface.
Reference documents:
[ 1 ] TR 36.814, "Further advancements for E-UTRA physical layer aspects".
[ 2 ] 3GPP TS 36.321, v8.1.0 (2008-03), 3GPP Technical Specification Group Radio Access Network E-UTRA MAC protocol specification (Release 8).

### SUMMARY OF THE INVENTION

It is an object of the present invention to provide a dynamically scheduling scheme for an uplink transmission method, wherein a base station may dynamically configure the uplink transmission method of a relay node based on situations to thereby achieve reduced latency and improved resource efficiency for uplink transmission.

According to the first aspect of the present invention, there is provided a method for uplink transmission, comprising steps of: selecting, based on statistical parameters for uplink traffic of a relay node, an uplink transmission method from a set of candidate uplink transmission methods; informing the relay node of the selected uplink transmission method; and performing the uplink transmission by the relay node according to the selected uplink transmission method.

Preferably, the set of candidate uplink transmission methods comprises at least one of: a scheduling request based transmission method, a pre-allocating resource transmission method, and a contention based transmission method.

Preferably, if the selected uplink transmission method is the pre-allocating resource transmission method, the relay node will perform the uplink transmission on a pre-allocated resource.

Preferably, if the selected uplink transmission method is the contention based transmission method, the relay node will perform the uplink transmission on a pre-allocated contention resource based on a contention mechanism.

Preferably, if the selected uplink transmission method is the scheduling request based transmission method, the relay node will send, upon receiving uplink data or an uplink scheduling request from a user equipment, an uplink scheduling request to a base station to request allocating an uplink resource; and the relay node will transmit the uplink data on the allocated uplink resource.

Preferably, after the step of the relay node sending the uplink scheduling request to the base station, the method further comprises: generating by the relay node a buffer status report message based on the amount of data in a buffer, and sending the generated buffer status report message to the base station.

Preferably, the method further comprises: upon receiving a buffer status report message from a user equipment, generating by the relay node a buffer status report message to be sent to a base station based on the amount of data in a buffer and the received buffer status report message, and sending the generated buffer status report message to the base station.

According to the second aspect of the present invention, there is provided a base station, comprising: a transmission method selecting unit configured to select an uplink transmission method from a set of candidate uplink transmission methods based on statistical parameters for uplink traffic of a relay node; and a selection result informing unit configured to inform the relay node of the selected uplink transmission method.

According to the third aspect of the present invention, there is provided a relay node, comprising: a receiving unit configured to receive a message indicating an uplink transmission method; and an uplink transmission unit configured to perform uplink transmission based on the uplink transmission method indicated by the received message.

### BRIEF DESCRIPTION OF THE DRAWINGS

The above and other objects, features and advantages of the present invention will become more obvious by making references to the following detailed description of nonrestrictive embodiments of the present invention in conjunction with the accompanying drawings, in which:

FIG. 1 illustrates a schematic diagram of a basic node and interface in a system where a Type-I relay is deployed;

FIG. 2 illustrates a schematic diagram of the uplink transmission method according to a first embodiment of the present invention;

FIG. 3 illustrates a schematic diagram of the uplink transmission method according to a second embodiment of the present invention;

FIG. 4 illustrates a schematic diagram of the uplink transmission method according to a third embodiment of the present invention; and

FIG. 5 illustrates a schematic diagram of system configuration for the uplink transmission method according to a fifth embodiment of the present invention.

### DETAILED DESCRIPTION OF EMBODIMENTS

Embodiments of the present invention are now described in detail with reference to the accompanying drawings. In the following descriptions, some specific embodiments are only used for description purposes and they shall not be construed as any limitation to the present invention, but merely examples of the present invention. It needs to be pointed out that the schematic diagrams only illustrate differences from existing systems while omit conventional structures or compositions to avoid ambiguous understanding of the present invention.

In LTE-A, relay is used as an enhanced technology for implementing traffic/signaling forwarding between a base station and a user equipment so as to achieve a better coverage rate and an increased throughput.

When the concept of a relay node is introduced, a straightforward method for uplink transmission on the Un interface is to reuse the existing SR and BSR procedures on the Uu interface.

FIG. 2 illustrates a schematic diagram of the uplink transmission method according to the first embodiment of the present invention. In the uplink transmission method according to the first embodiment of the present invention, the existing SR and BSR procedures are employed on the Un interface (hereinafter the uplink transmission method is called as a sequential SR and sequential BSR transmission method).

Firstly, at step S201, the user equipment triggers the SR procedure and sends a scheduling request to the relay node. At step S202, the relay node feeds back an uplink scheduling grant message to the user equipment. Then, at step S203, the user equipment sends a BSR message to the relay node. At step S204, the relay node allocates uplink resources based on the BSR message received from the user equipment and feeds back an uplink scheduling grant message to the user equipment. At step S205, the user equipment that has received the uplink scheduling grant message sends uplink data to the relay node. This is the existing SR and BSR procedures on the Uu interface.

When the relay node receives from the user equipment the uplink data to be transmitted to the base station, and the data belongs to a logical channel with higher priority than other available data or there is no other data to be transmitted, the relay node will trigger a regular BSR procedure. Once the regular BSR is triggered and the relay node has no uplink resources, an SR procedure will be triggered for requesting uplink resources.

Thus, at step S206, the relay node sends a scheduling request to the base station. At step S207, the base station feeds back an uplink scheduling grant message to the relay node. Then, at step S208, the relay node sends a BSR message to the base station. At step S209, the base station allocates uplink resources based on the BSR message received from the relay node, and feeds back an uplink scheduling grant message to the relay node. At step S210, the relay node that has received the uplink scheduling grant message sends the uplink data to the base station.

Thus, this scheme can be easily introduced into specifications.

In the uplink transmission method according to the first embodiment of the present invention, the uplink data from the user equipment to the base station is postponed for requesting uplink resources first on the Un interface. This latency may be further increased considering subframe intervals for the uplink scheduling grant message.

Thus, the SR and BSR procedures on the Un interface may be modified in order to decrease the latency and increase resource efficiency.

The latency incurred by the uplink transmission method according to the first embodiment of the present invention results from several aspects. Firstly, the SR procedure is triggered only when the uplink data from the user equipment actually arrives at the relay node. Secondly, the BSR message sent to the base station only indicates the amount of data in the uplink buffer of the relay node for that moment, whereas there may be new uplink data from the user equipment arriving at the relay node after the relay node sends the BSR message to the base station and before the relay node sends the uplink data to the base station. In addition, the relay node always requests uplink resources via the SR and BSR procedures, while actually some adapted mechanisms could be used depending on the current load status of the relay node.

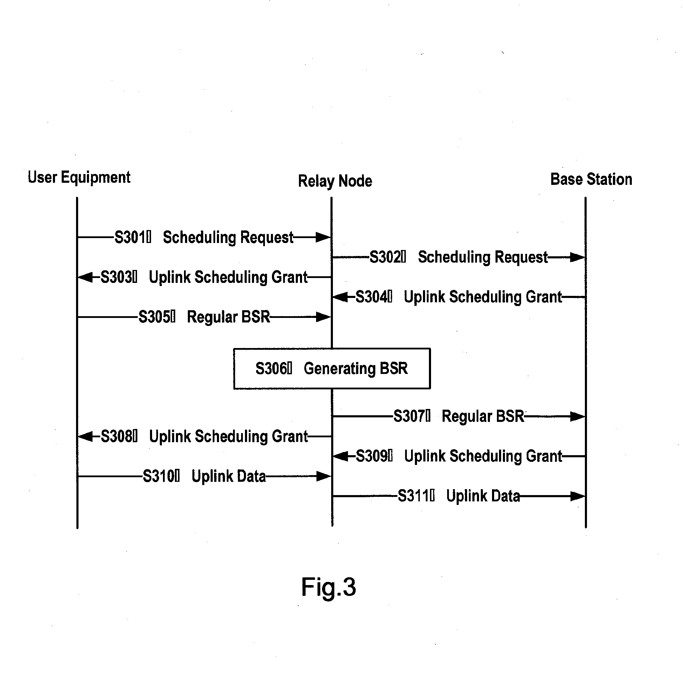

FIG. 3 illustrates a schematic diagram of the uplink transmission method according to the second embodiment of the present invention.

The difference between the uplink transmission method according to the second embodiment of the present invention and the uplink transmission method according to the first embodiment of the present invention lies in the triggering time for the SR procedure and the BSR procedure at the relay node. In the uplink transmission method according to the second embodiment of the present invention, when the relay node receives a scheduling request from the user equipment served by itself, it will trigger the SR procedure immediately when there are no available uplink resources. A scheduling request will be sent to the base station to request uplink resources when the SR periodicity arrives. Likewise, in the uplink transmission method according to the second embodiment of the present invention, when the relay node receives the BSR message from the user equipment served by itself, it will generate a BSR message and immediately trigger the BSR procedure to the base station.

As illustrated in FIG. 3, in the uplink transmission method according to the second embodiment of the present invention, the user equipment triggers, at step S301, the SR procedure and sends a scheduling request to the relay node. The relay node that has received the scheduling request will trigger, at step S302, the SR procedure and send a scheduling request to the base station. Then, at step S303, the relay node feeds back an uplink scheduling grant message to the user equipment. At step S304, the base station feeds back an uplink scheduling grant message to the relay node. At step S305, the user equipment sends a BSR message to the relay node.

Hereafter, steps S206-S210 according to the first embodiment of the present invention may be employed.

In the uplink transmission method according to the second embodiment of the present invention, in order to further reduce the latency, when the relay node receives a BSR message from the user equipment served by itself, it will immediately trigger the BSR procedure and send a BSR message to the base station.

Thus, at step S306, the relay node generates a BSR message to be sent to the base station. At this point, the relay node not only considers the amount of data in its own uplink buffer but also considers the amount of coming data from the user equipment. Then, at step S307, the relay node triggers a regular BSR procedure and sends the generated BSR message to the base station.

The user equipment will receive, at step S308, an uplink scheduling grant message from the relay node and send, at step S310, uplink data to the relay node.

After the relay node receives, at step S309, an uplink scheduling grant message from the base station, it will send at step S311 the uplink data to the base station.

Thus, different from the sequential performance of the SR and BSR procedures at the user equipment and the SR and BSR procedures at the relay node in the uplink transmission method according to the first embodiment of the present invention, in the uplink transmission method according to the second embodiment of the present invention, the SR and BSR procedures at the user equipment and the SR and BSR procedures at the relay node are interleaved (i.e. an enhanced SR transmission method and an enhanced BSR transmission method are employed simultaneously). In the uplink transmission method according to the second embodiment of the present invention, when the relay node receives uplink data from the user equipment, it may immediately and quickly transfer the uplink data to the base station without waiting for a prolonged SR procedure and BSR procedure.

FIG. 3 illustrates an example of the uplink transmission method according to the second embodiment of the present invention. The uplink transmission method according to the second embodiment of the present invention does not have to follow the order of above steps S301-S311. For example, S302 can even be triggered after S303 or S305, and S307 may also be triggered after S308. This can be configured by the relay node.

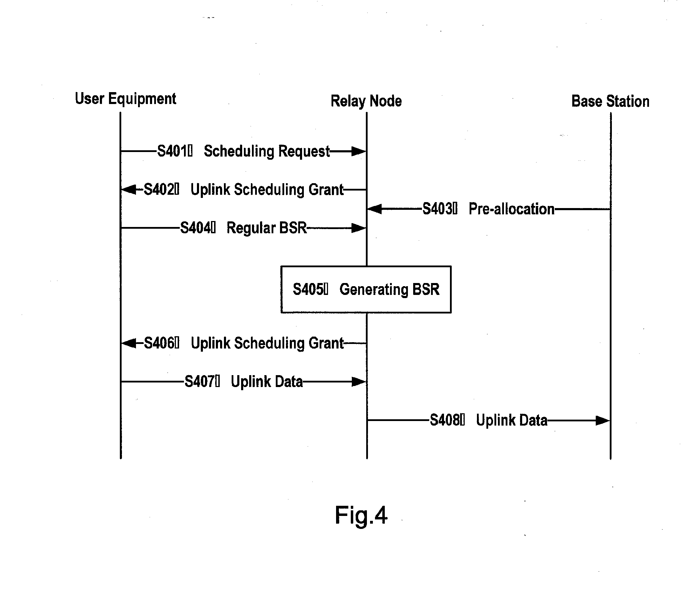

FIG. 4 illustrates a schematic diagram of the uplink transmission method according to the third embodiment of the present invention.

The difference between the uplink transmission method according to the third embodiment of the present invention and the uplink transmission method according to the second embodiment of the present invention lies in the SR and BSR procedures at the relay node being omitted.

Different from the relay node requesting uplink resources via the SR procedure and the BSR procedure in the uplink transmission method according to the first and second embodiments of the present invention, in the uplink transmission, method according to the third embodiment of the present invention, the base station employs a pre-allocation mechanism to allocate uplink resources to the relay node. The relay node sends uplink data to the base station on the allocated resource (hereinafter the uplink transmission method according to the third embodiment of the present invention will be called as a pre-allocating resource transmission method).

As illustrated in FIG. 4, steps S401, S402, S404, S405, S406, S407 and S408 in the uplink transmission method according to the third embodiment of the present invention are respectively the same as steps S301, S303, S305, S306, S308, S310 and S311 in the uplink transmission method according to the second embodiment of the present invention.

Instead of the SR procedure and the BSR procedure at the relay node, i.e. steps S302, S304 and S309, at step S403, the base station employs a pre-allocation mechanism to allocate uplink resources to the relay node. That is, for unused uplink resources, the base station sends an uplink scheduling grant message to the relay node to inform it of available uplink scheduling resources.

Thus, the relay node may send uplink data by using the pre-allocated uplink resources without sending scheduling requests, SR and BSR messages in advance.

However, when the relay node has no data to transmit, it will respond with a padding BSR message, which may increase uplink interference and decrease resource usage efficiency. Therefore, the pre-allocating resource transmission method may be employed when the relay node is in a situation with high traffic load.

It needs to be noted that when the data to be sent by the relay node has a higher priority, or in some other situations such as the allocated uplink resources being insufficient, the relay node may also generate a BSR message and trigger the BSR procedure, and send the BSR message to the base station on the allocated resource to request uplink resources. Here, the BSR message generated by the relay node may also consider the amount of data to be sent by the user equipment to the relay node. At this point, the enhanced BSR method may be employed.

The uplink transmission method according to the third embodiment of the present invention reduces the system latency due to the omission of the SR procedure (even the BSR procedure might also be omitted).

The difference between the uplink transmission method according to the fourth embodiment of the present invention and the uplink transmission method according to the third embodiment of the present invention lies in the manner for acquiring uplink resources.

In the uplink transmission method according to the fourth embodiment of the present invention, the base station informs multiple relay nodes of unused uplink resources. The relay nodes employ a contention based uplink transmission method to directly transmit uplink data on the unused resources (hereinafter the uplink transmission method according to the fourth embodiment of the present invention is called as a contention based transmission method). This does not need the SR procedure on the Un interface and thus can further reduce the latency and signaling overhead. Like the uplink transmission method according to the third embodiment of the present invention, in the uplink transmission method according to the fourth embodiment of the present invention, the relay node can also trigger the BSR procedure when it is required, and send the BSR message to the base station on the allocated resources to request uplink resources. At this point, the enhanced BSR method can also be employed.

However, the main drawback of the contention based uplink transmission method is the increased error bit rate caused by data collision. Thus, the uplink transmission method according to the fourth embodiment of the present invention is constrained for a situation with low traffic load, where the relay nodes only generate a limited amount of traffic. Furthermore, once high priority traffic with strict latency requirement arrives at a relay node while no uplink resources are available at the relay node, the contention based uplink transmission method can be utilized.

The uplink transmission methods according to the first to fourth embodiments of the present invention are only examples of the uplink transmission methods that can be employed in a system where relay nodes are deployed. Other methods in other running environments can also be designed.

Importantly, the base station may dynamically select, based on statistical parameters for uplink traffic of a relay node, different uplink transmission methods to achieve good latency performance and high resource usage efficiency.

For example, the statistical parameters for uplink traffic of the relay node may be such parameters as the amount and priority of the traffic, etc.

For example, the base station may be configured to:
when the relay node is in a situation with relatively heavy load, the pre-allocating resource transmission method is used;
when the relay node is in a situation with relatively light load, the enhanced SR transmission method and/or enhanced BSR transmission method is used;
when the relay node is in a situation with lighter load and receives high priority data having a strict latency requirement, the contention based transmission method is used.

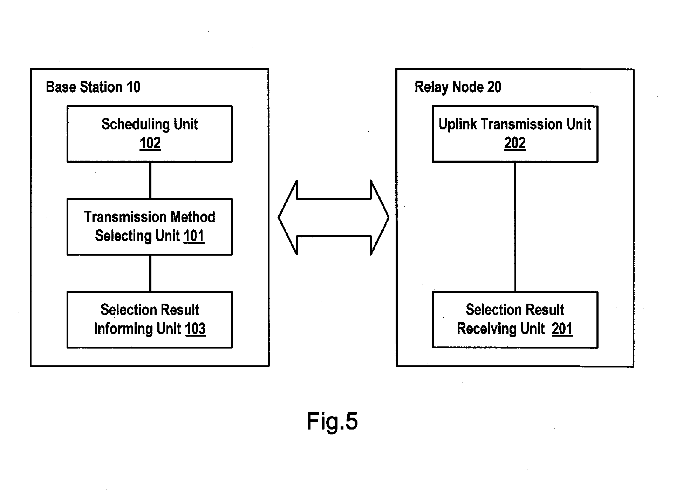

FIG. 5 illustrates a schematic diagram of system configuration for the uplink transmission method according to the fifth embodiment of the present invention.

As illustrated in FIG. 5, in a system where a relay node is deployed, the base station 10 comprises a transmission method selecting unit 101, a scheduling unit 102 and a selection result informing unit 103. Correspondingly, the relay node 20 comprises a selection result receiving unit 201 and an uplink transmission unit 202.

The transmission method selecting unit 101 selects an appropriate uplink transmission method based on statistical parameters for uplink traffic of the relay node. Based on different situations, a set of candidate uplink transmission methods can be configured / stored in advance for the base station. The transmission method selecting unit 101 selects an uplink transmission method from the set of candidate uplink transmission methods.

Then, the transmission method selecting unit 101 informs the scheduling unit 102 and the selection result informing unit 103 of the selection result.

The selection result informing unit 103 sends the selection of the base station to the selection result receiving unit 201 of the relay node 20. For example, a flag can be set in the identification field of the uplink scheduling grant message to inform the relay node of the selection result.

Then, uplink data is transmitted between the scheduling unit 102 of the base station 10 and the uplink transmission unit 202 of the relay node 20 based on the selected uplink transmission method. As described above, the uplink transmission unit 202 can transmit the uplink data according to the above first to fourth embodiments. Certainly, the relay node 20 may further comprise a buffer (not shown) configured to buffer the uplink data. When the selected uplink transmission method is the uplink transmission method according to the second embodiment, the uplink transmission unit 202 will generate, based on the amount of data in the buffer and the BSR message received from the user equipment, a BSR message to be sent to the base station and send the generated BSR message to the base station.

At this point, the transmission method selecting unit 101 can continuously monitor the statistical parameters for uplink traffic of the relay node and re-select an uplink transmission method based on requirements.

Although the above descriptions relate to multiple units, the present invention can be implemented by dividing one unit into multiple units or by combining multiple units into one unit, as long as corresponding functions can be performed by the divided units or the combined unit.

Those skilled in the art shall readily recognize that different steps of the method described above may be implemented by a programmed computer. Here, some embodiments include a machine or computer readable program storage apparatus (e.g. a digital data storage medium), and encoding machine executable or computer executable program instructions, wherein the instructions implement some or all steps of the above method. The program storage apparatus may be, for example, a digital memory, a magnetic storage medium (such as a magnetic disk and a magnetic tape), hardware or an optical readable digital data storage medium. The embodiments also include a programmed computer for implementing the steps of the above method.

The descriptions and drawings only illustrate the principle of the present invention. Thus, it should be recognized that those skilled in the art can suggest different structures. Although the different structures are not explicitly described or shown herein, they reflect the principle of the present invention and are included in the spirit and scope of the present invention. In addition, all examples mentioned here are definitely, mainly used only for teaching purposes to help a reader to understand the principle of the present invention and the conception contributed by inventors for improvement of the art, and should not be construed as limitations to the specifically mentioned examples and conditions. In addition, all of the statements and the specific examples herein mentioning the principles, aspects and implementations of the present invention include the equivalents thereof.

The above descriptions are only used to implement the embodiments of the present invention, and those skilled in the art shall understand that any modification or partial substitution without departure from the scope of the present invention shall fall into the scope limited by the claims of the present invention. Thus, the protection scope of the present invention shall depend on the protection scope of the claims.

## Claims

1. A method for uplink transmission, comprising steps of:
selecting, based on statistical parameters for uplink traffic of a relay node, an uplink transmission method from a set of candidate uplink transmission methods;
informing the relay node of the selected uplink transmission method; and
performing the uplink transmission by the relay node according to the selected uplink transmission method.

2. The method according to claim 1, wherein the set of candidate uplink transmission methods comprises at least one of: a scheduling request based transmission method, a pre-allocating resource transmission method, and a contention based transmission method.

3. The method according to claim 2, wherein
if the selected uplink transmission method is the pre-allocating resource transmission method, the relay node performs the uplink transmission on a pre-allocated resource.

4. The method according to claim 2, wherein
if the selected uplink transmission method is the contention based transmission method, the relay node performs the uplink transmission on a pre-allocated contention resource based on a contention mechanism.

5. The method according to claim 2, wherein
if the selected uplink transmission method is the scheduling request based transmission method, the relay node sends, upon receiving uplink data or an uplink scheduling request from a user equipment, an uplink scheduling request to a base station to request allocating an uplink resource; and the relay node transmits the uplink data on the allocated uplink resource.

6. The method according to claim 5, after the step of the relay node sending the uplink scheduling request to the base station, further comprising:
generating by the relay node a buffer status report message based on the amount of data in a buffer, and sending the generated buffer status report message to the base station.

7. The method according to any of claims 3-5, further comprising:
upon receiving a buffer status report message from a user equipment, generating by the relay node a buffer status report message to be sent to a base station based on the amount of data in a buffer and the received buffer status report message, and sending the generated buffer status report message to the base station.

8. The method according to any of claims 1-7, wherein the selected uplink transmission method is informed to the relay node using an uplink scheduling grant message.

9. A base station, comprising:
a transmission method selecting unit configured to select an uplink transmission method from a set of candidate uplink transmission methods based on statistical parameters for uplink traffic of a relay node; and
a selection result informing unit configured to inform the relay node of the selected uplink transmission method.

10. The base station according to claim 9, wherein the set of candidate uplink transmission methods comprises at least one of: a scheduling request based transmission method, a pre-allocating resource transmission method, and a contention based transmission method.

11. A relay node, comprising:
a receiving unit configured to receive a message indicating an uplink transmission method; and
an uplink transmission unit configured to perform uplink transmission based on the uplink transmission method indicated by the received message.

12. The relay node according to claim 11, wherein
if the received message indicates a pre-allocating resource transmission method, the uplink transmission unit performs the uplink transmission on a pre-allocated resource.

13. The relay node according to claim 11, wherein
if the received message indicates a contention based transmission method, the uplink transmission unit performs the uplink transmission on a pre-allocated contention resource based on a contention mechanism.

14. The relay node according to claim 11, wherein
if the received message indicates a scheduling request based transmission method, the uplink transmission unit sends, upon receiving uplink data or an uplink scheduling request from a user equipment, an uplink scheduling request to a base station to request allocating an uplink resource; and transmits the uplink data on the allocated uplink resource.

15. The relay node according to claim 14, wherein the uplink transmission unit further generates a buffer status report message based on the amount of data in a buffer, and sends the generated buffer status report message to the base station.

16. The relay node according to any of claims 12-14, wherein upon receiving a buffer status report message from a user equipment, the uplink transmission unit generates a buffer status report message to be sent to a base station based on the amount of data in a buffer and the received buffer status report message, and sends the generated buffer status report message to the base station.
